(19) **Europäisches Patentamt**

**European Patent Office**

**Office européen des brevets**

(11) **EP 1 089 899 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.⁷: **B60R 21/32**, B60R 21/00

(21) Anmeldenummer: **99936390.6**

(86) Internationale Anmeldenummer:
**PCT/DE99/01622**

(22) Anmeldetag: **01.06.1999**

(87) Internationale Veröffentlichungsnummer:
**WO 99/067110 (29.12.1999 Gazette 1999/52)**

(54) **VORRICHTUNG ZUM AUSLÖSEN EINES INSASSENSCHUTZMITTELS EINES KRAFTFAHRZEUGS**

DEVICE FOR TRIGGERING A PASSENGER PROTECTION DEVICE OF AN AUTOMOBILE

DISPOSITIF DE DECLENCHEMENT D'UN DISPOSITIF DE PROTECTION DES OCCUPANTS D'UN VEHICULE A MOTEUR

(84) Benannte Vertragsstaaten:
**DE FR GB IT**

(30) Priorität: **25.06.1998 DE 19828432**

(43) Veröffentlichungstag der Anmeldung:
**11.04.2001 Patentblatt 2001/15**

(73) Patentinhaber: **SIEMENS AKTIENGESELLSCHAFT**
**80333 München (DE)**

(72) Erfinder:
• **SCHMIDT, Claus**
**D-93053 Regensburg (DE)**
• **SWART, Marten**
**D-93083 Obertraubling (DE)**
• **RIEDERER, Ludwig**
**D-93107 Thalmassing (DE)**

(56) Entgegenhaltungen:
**US-A- 5 433 101       US-A- 5 657 831**
**US-A- 5 828 138**

**Beschreibung**

Die Erfindung betrifft eine Vorrichtung zum Auslösen eines Insassenschutzmittels eines Kraftfahrzeugs.

Aus der US 5,460,404 ist eine Insassenschutzmittelvorrichtung bekannt, bei der eine Serienschaltung eine Energiequelle, eine erste steuerbare Endstufe und einen Parallelkreis bestehend aus drei Serienzweigen mit je einem Zündelement und einer weiteren steuerbaren Endstufe enthält. Jedes Zündelement wird ausgelöst, wenn die gemeinsame Endstufe und gleichzeitig die dem jeweiligen Zündelement individuell zugeordnete Zündstufe leitend geschaltet sind. Die individuell zugeordneten Zündstufen werden dabei von einem Mikroprozessor gesteuert, der aufgrund der Auswertung eines Beschleunigungssignals einen Aufprall erkennt. Die gemeinsame Endstufe wird durch eine kundenspezifische integrierte Schaltungsanordnung gesteuert, die den Spannungsabfall an einem elektromechanischen Beschleunigungsschalter überwacht und so ein Schließen der Schaltkontakte und damit die Notwendigkeit der Ansteuerung der gemeinsamen Endstufe erkennen kann.

Aus der DE 196 25 618 A1 ist ein elektromechanischer Beschleunigungsschalter bekannt, der testbar ausgebildet ist. Der Beschleunigungsschalter weist eine beschleunigungsabhängige in Richtung auf eine Festelektrode bewegbare Biegeelektrode auf. Berühren sich Festelektrode und Biegeelektrode, so gibt der mikromechanisch ausgebildete Beschleunigungsschalter - zwischen dessen Fest- und Biegeelektrode im berührungslosen Zustand eine Spannung anliegt - ein Schaltsignal in Form eines Strompulses, der von einer Steuerschaltung erkannt wird. Weiter weist ein solcher Beschleunigungsschalter eine Testelektrode auf, die bei Beaufschlagung mit einer Spannung die Biegeelektrode aufgrund elektrostatischer Kräfte hin zur Festelektrode lenkt und damit elektrisch gesteuert ein Schließen der Beschleunigungsschalterelektroden verursacht.

Wird nun der elektromechanische Beschleunigungsschalter aus der US 5,460,404 durch einen testbaren mikromechanischen Beschleunigungsschalter gemäß der DE 196 25 618 A1 ersetzt, so wird während eines Testbetriebs des Beschleunigungsschalters ein Zünden der Zündelemente infolge der nicht durchgesteuerten, den Zündelementen individuell zugeordneten Endstufen verhindert. Dies gilt jedoch nur insoweit, als daß der Mikroprozessor fehlerfrei arbeitet und kein Steuersignal zum Durchschalten der Endstufen liefert. Ist jedoch während eines Testlaufes für den Beschleunigungsschalter der Mikroprozessor defekt, so besteht die Gefahr einer insassengefährdenden Fehlauslösung einer oder mehrerer Rückhaltemittel des Insassenschutzsystems wie Airbags oder Gurtstraffer.

Aus der gattungstaldenden US-A-5 433 101 ist eine Insassenschutzmittelvorrichtung für ein Kraftfahrzeug bekannt. Ein kapazitiver Beschleunigungssensor liefert dabei ein analoges Beschleunigungssignal, welches einem Algorithmus unterzogen wird. Erkennt der Algorithmus einen ausreichend schweren Aufprall, so wird ein aus zwei Zündkreisschaltern bestehendes Schaltmittel für das Insassenschutzmittel aktiviert. Der Beschleunigungssensor ist testbar. Wird der Beschleunigungssensor nun während eines Sensortests elektrisch angeregt, so durchläuft das derart induzierte Sensorsignal den Algorithmus und generiert bei geeigneter Anregung des Sensors ein Aktivierungssignal für das Schaltmittel. Damit jedoch während eines Tests das Insassenschutzmittel nicht ausgelöst wird, wird während des Tests ein Zündkreisschalter des Schaltmittels gesperrt.

Aufgabe der Erfindung ist es deshalb, eine Vorrichtung anzugeben, die die Nachteile der bekannten Vorrichtungen vermeidet, und insbesondere ein Auslösen eines Rückhaltemittels während eines Beschleunigungsschaltertests verhindert.

Die Aufgabe wird durch die Merkmale des Patentanspruchs 1 gelöst.

Erfindungsgemäß ist ein vorzugsweise in seiner Hardware von der Steuerschaltung unabhängig ausgebildetes Sperrmittel vorgesehen, das eine Betätigung des Schaltmittels während eines Tests des Beschleunigungsschalters verhindert. Während der Dauer des Beschleunigungsschaltertests, also zumindest während der Dauer, in der die Kontakte des Beschleunigungsschalters geschlossen sind, verhindert das Sperrmittel ein Auslösen des Zündelements, selbst wenn das Schaltmittel infolge eines Auslösesignals des Mikroprozessors angesteuert wird.

Ist beispielsweise die Steuerschaltung als Mikroprozessor ausgebildet, so ist das Sperrmittel vorzugsweise nicht als Softwarefunktion des Mikroprozessors sondern als eigenständiges Bauelement ausgebildet, beispielsweise auf einem von dem Mikroprozessor separat ausgebildeten Träger. Damit wird die Wahrscheinlichkeit einer Fehlauslösung weiter verringert.

Vorteilhafte Weiterbildungen der Erfindung sind durch die Unteransprüche gekennzeichnet.

Die Erfindung und ihre Weiterbildungen werden anhand von Ausführungsbeispielen gemäß der Zeichnung näher erläutert. Es zeigen:

Figur 1: ein erstes Schaltbild der erfindungsgemäßen Vorrichtung, und

Figur 2: ein weiteres Schaltbild der erfindungsgemäßen Vorrichtung.

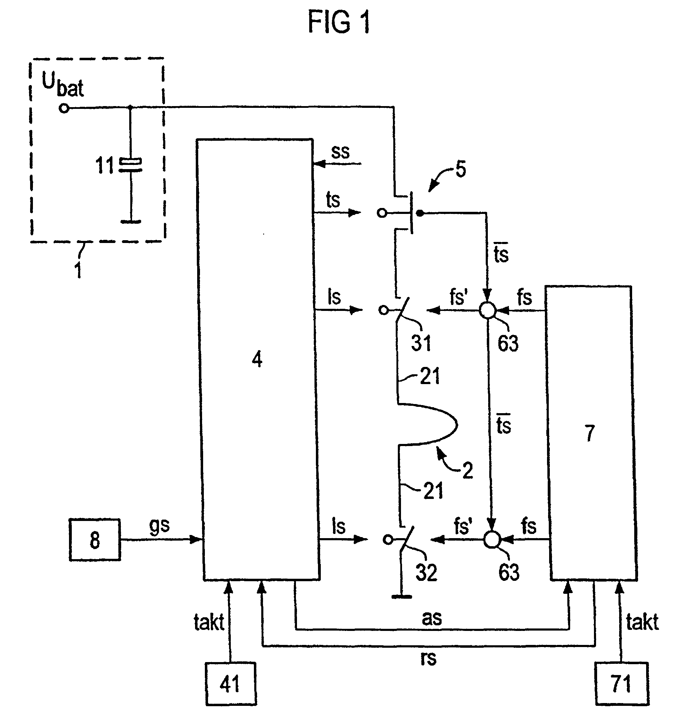

Figur 1 zeigt das Schaltbild einer erfindungsgemäßen Vorrichtung zum Auslösen eines Insassenschutzmittels. Eine Energiequelle 1 ist in Serie angeordnet zu einem elektromechanischen Beschleunigungsschalter 5, einer ersten elektrisch steuerbaren Endstufe 31, einem Zündelement 2 des Insassenschutzmittels und einer zweiten elektrisch steuerbaren Endstufe 32. Zum Beaufschlagen des Zündelements 2 mit Strom aus der Energiequelle 1 ist eine gesteuertes Leitendschalten des die elektrisch steuerbaren Endstufen 31 und 32 enthaltenden Schaltmittels durch eine Steuerschaltung 4 erforderlich, die vorzugsweise als Mikroprozessor ausgebildet ist, wie auch ein gleichzeitiges Schließen von Kontakten des Beschleunigungsschalters 5. Es obliegt dem fachmännischen Können, die Schaltung alternativ derart auszubilden, daß das Zündelement 2 mit Energie beaufschlagt wird, wenn die Kontakte des Beschleunigungsschalters 5 öffnen oder wenn das Schaltmittel sperrend geschaltet wird.

Energiequelle 1, Steuerschaltung 4, sowie Beschleunigungsschalter 5 und steuerbare Endstufen 31 und 32 sind gewöhnlich in einem Airbagsteuergerät im Kraftfahrzeug angeordnet. Das Airbagsteuergerät ist über Zuleitungen 21 mit dem beim Insassenschutzmittel angeordneten Zündelement 2 verbunden. Die steuerbaren Endstufen 31 und 32 werden über Auslösesignale ls der Steuerschaltung 4 leitend geschaltet. Dabei erzeugt die Steuereinheit 4 diese Auslösesignale ls, wenn die Auswertung eines von einem Beschleunigungssensor 8 gelieferten Beschleunigungssignals gs einen zum Auslösen des Insassenschutzmittels ausreichend starken Aufprall erkannt hat. Damit eine Auslöseentscheidung nicht alleine von der Funktiontüchtigkeit eines einzigen Sensors und einer einzigen Steuerschaltung abhängt, weisen Insassenschutzvorrichtungen gewöhnlich einen elektromechanischen Beschleunigungsschalter auf, dessen Biegearm mit seismischer Masse als Biegeelektrode bei Einwirkung einer Mindestbeschleunigung einen Gegenkontakt als Festelektrode schließt und damit einen Stromfluß im Zündkreis 1,2,3,5 nach Figur 1 ermöglicht.

Der testbar ausgebildete Beschleunigungsschalter 5 wird veranlaßt durch ein Testsignal ts der Steuerschaltung 4 zum Schließen seiner Kontakte gezwungen. Die Kontakte durch das Testsignal TS können aber auch in sonstiger Weise im Testbetrieb kurzgeschlossen werden. Gewöhnlich wird die Spannung zwischen den Kontakten des Beschleunigungsschalters 5 bei einem derartigen Test von der Steuerschaltung aufgenommen: Schließen die Kontakte, wird ein Schaltsignal ss erzeugt. Anhand der Auswertung des Schaltsignals ss in der Steuerschaltung 4 kann auf die Funktionsfähigkeit des Beschleunigungsschalters 5 zurückgeschlossen werden. Bricht die Spannung zwischen den Schaltkontakten beispielsweise bei einem derartigen Test nicht zusammen und wird damit kein Schaltsignal ss erzeugt, so ist der in seiner Ruhestellung geöffnete Beschleunigungsschalter 5 nicht schließbar. Der Fahrer des Kraftfahrzeugs wird beispielsweise über eine visuelle Warneinrichtung über den Fehlerzustand des Airbagsteuergerätes informiert.

Erfindungsgemäß werden nun während der Zeitdauer des erzeugten Testsignals die steuerbaren Endstufen in einer Weise blockiert, die auch bei vorhandenem Auslösesignal ls der Steuerschaltung ein Leitendschalten verhindert. Ist beispielsweise jede Endstufe als Feldeffekttransistor ausgebildet, der über eine Gate-Elektrode gesteuert wird, so ist erfindungsgemäß ein UND-Gatter als Sperrmittel vorgesehen, dessen Ausgang mit der Gate-Elektrode der jeweiligen Endstufe verbunden ist und an dessen Eingänge das Auslösesignal ls und das invertierte Testsignal $\overline{ts}$ geführt sind. Damit werden während der Dauer des Beschleunigungsschaltertests die Endstufen 31 und 32 blockiert.

Anstelle der als Transistor ausgebildeten steuerbaren Endstufen kann jeder andere elektrisch steuerbare Schalter mit ausreichender Stromtragfähigkeit verwendet werden. Auch kann in einem Zündkreis der Insassenschutzmittelvorrichtung nur eine einzige steuerbare Endstufe vorgesehen sein.

Alternativ ist ein Eingang des vorbeschriebenen UND-Gatters mit dem Ausgang eines Flip-Flops verbunden, das an seinem Ausgang ein Signal entsprechend dem Schaltsignal des Beschleunigungsschalters liefert, wobei der Ausgang des Flip-Flops nur belegt wird, wenn das Schaltsignal ss kausal durch ein Testsignal hervorgerufen wird. Ein Setzen des Flip-Flops erfolgt durch das Testsignal, ein Rücksetzen wiederum durch einen Low-Zustand des Schaltsignals. Eine derartige Schaltungsanordnung ist insbesondere dann vorteilhaft, wenn der Beschleunigungsschalter zeitlich über das Einwirken des Testsignals ts hinaus das Schaltsignal ss liefert, wobei beispielsweise die Kontakte des Beschleunigungsschalters aufgrund Verschmutzung aneinander haften bleiben. Auch hier wird bei einer fehlerhaft arbeitenden Steuerschaltung ein versehentliches Auslösen des Zündelements verhindert. Vorzugsweise wird der Insasse über eine optische oder akustische Warneinrichtung über den Zustand des Insassenschutzsystems informiert, sofern ein Testsignal ts ein Schaltsignal ss mit einer länger als erwarteten Zeitdauer hervorrufen sollte.

Gemäß Figur 1 wird das Blockieren der elektrisch steuerbaren Endstufen 31 und 32 während eines Beschleunigungsschaltertests in einer weiteren alternativen vorteilhaften Weiterbildung ausgeführt. Gewöhnlich ist in einem Airbagsteuergerät eine als sogenannter Watch-Dog ausgebildete Überwachungsschaltung 7 vorgesehen. Diese Überwachungsschaltung 7 setzt ein von der Steuerschaltung 4 geliefertes Arbeitstaktsignal as in Relation zu einem Taktsignal takt eines der Überwachungsschaltung 7 eigens zugeordneten Taktgebers 71. Der Arbeitstakt as der Steuerschaltung 4 hingegen leitet sich aus einem Taktsignal takt eines eigens der Steuerschaltung 4 zugeordneten Taktgebers 41 ab. Die Betriebsweise der Überwachungsschaltung 7 ist im folgenden kurz erläutert: Wird eine erhebliche Abweichung zwischen dem von der Steuerschaltung 4 gelieferten Arbeitstaktsignal as und einem mit Hilfe des Taktgebers 71 ermittelten Soll-Arbeitstaktsignal ermittelt, so wird die Steuerschaltung 4 mit einem Rücksetzsignal rs rückgesetzt. Absicht dieses Rücksetzens ist es, den Arbeitstakt as der Steuerschaltung 4 wieder auf den vorgegebenen Sollwert einpendeln zu lassen. Wird festgestellt, daß der die Steuerschaltung 4 taktende Arbeitstakt as nicht dem vorgegebenen Wert - gegebenenfalls mit Toleranzen - entspricht, so wird über das Erzeugen des Rücksetzsignals rs hinaus ein Freigabesignal fs der Überwachungsschaltung 7 unterbrochen. Das Freigabesignal fs liegt normalerweise dauerhaft vor, solange die Überwachungsschaltung 7 einen tolerierbaren Arbeitstakt as der Steuerschaltung 4 ermittelt. Das Freigabesignal fs bewirkt, daß die steuerbaren Endstufen 31 und 32 infolge des Auslösesignals ls durchgeschaltet werden können. Das Freigabesignal fs der Überwachungsschaltung 7 ist damit UND-verknüpft mit dem Auslösesignal der Steuerschaltung 4. Hintergrund für ein Sperren der Endstufen 31 bzw 32 bei nicht tolerierbarem Arbeitstakt as ist, daß bei gravierend falschem Arbeitstakt ein fehlerhaftes Arbeiten der gesamten Steuerschaltung 4 vermutet wird. Zudem neigt ein derart fehlerhaft arbeitender Mikroprozessor dazu, sämtliche Ausgänge mit einem High-Pegel zu beaufschlagen, was ein ungewolltes Schließen der Endstufen 31 und 32 zur Folge hätte.

Erfindungsgemäß wird nun gemäß das invertierte Testsignal $\bar{ts}$ UND-verknüpft mit dem Freigabesignal fs der Überwachungsschaltung 7, so daß ein Durchsteuern der Endstufen 31 oder 32 generell nur außerhalb des Testbetriebs möglich ist. Das notwendige UND-Gatter zum Verknüpfen des Testsignals mit dem Freigabesignal ist jeweils durch das Bezugszeichen 63 gekennzeichnet. Aus dieser Signalverknüpfung geht das testbeeinflußte Freigabesignal fs' in Figur 1 hervor, das nun seinerseits UND-verknüpft ist mit dem Auslösesignal ls.

In einer alternativen Form ist der Ausgang vorbeschriebenen Flip-Flops mit dem Freigabesignal fs UND-verknüpft. Ist die Endstufe 31 oder 32 als Feleffekttransistor ausgebildet, so liegt der Ausgang des das testbeeinflußte Freigabesignal fs' und das Auslösesignal ls verknüpfende UND-Gatters an der Gate-Elektrode der Endstufe 31 oder 32 an. Vorteil dieser Weiterbildung ist, daß bei vorhandener Überwachungsschaltung die Hardware-Konfiguration zur Ansteuerung der Endstufen 31 und 32 kaum verändert werden muß.

Für alle Ausbildungen der Steuerung der Endstufen 31 oder 32 ist von Vorteil, daß die Auslösesignale ls mit den Signalen ts, ss, fs oder fs', die einen Testbetrieb des Beschleunigungsschalters 5 kennzeichnen, über eine Hardware verknüpft werden, die unabhängig ist von der Hardware der Steuerschaltung 4, sodaß ein fehlerhefter Betrieb der Steuerschaltung sich nicht auf die Hardware des Sperrmittels übertragen kann.

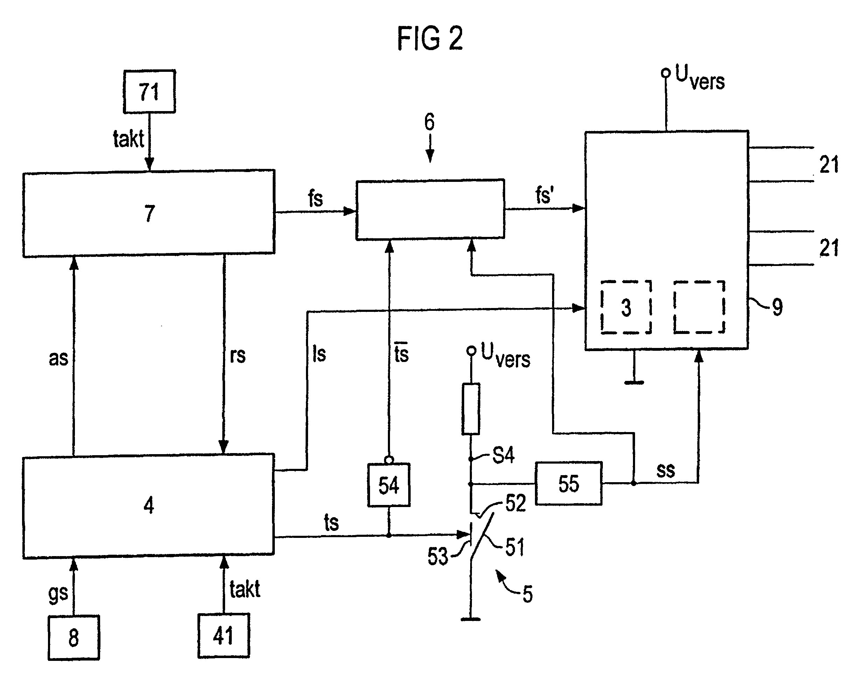

Figur 2 zeigt ein weiteres Ausführungsbeispiel der Erfindung. Dabei unterscheidet sich die Anordnung nach Figur 2 von der Anordnung nach Figur 1 im wesentlichen darin, daß die steuerbaren Endstufen 31 und 32 als Schaltmittel 3 in integrierter Form in einem integrierten Zündschaltkreis 9 vorliegen, der weitere Diagnose- und Prüfbauteile und - routinen umfaßt. Angedeutet sind von diesem integrierten Zündschaltkreis 9 abgehende Zuleitungen 21 zu nicht eingezeichneten Zündelementen. Ein weiterer wesentlicher Unterschied zur Anordnung nach Figur 1 liegt ferner darin, daß der Beschleunigungsschalter 5 beim Auslösen des Zündelements 2 nicht stromtragend sondern als Triggerschalter ausgebildet ist, der ein Schaltsignal ss an den integrierten Zündschaltkreis 9 liefert. Im integrierten Zündschaltkreis 9 ist eine Verknüpfung vorgesehen, die nur dann die Zündelemente 2 mit ausreichender Energie beaufschlagt, wenn sowohl das Auslösesignal ls der Steuerschaltung 4 als auch das Schaltsignal ss des Beschleunigungsschalters 5 vorliegen. Diese Verknüpfung kann zündschaltkreisseitig durch eine entsprechende Serienschaltung von steuerbaren Endstufen erfolgen.

Die Ausbildung des Beschleunigungsschalters 5 als Triggerschalter, dessen Schaltsignal ss im Niedrigpegelbereich weitergeleitet wird, hat den Vorteil, daß der Beschleunigungsschalter 5 keine hohe Stromtragfähigkeit aufweisen muß und damit vorzugsweise in integrierter, mikromechanischer Form ausgebildet werden kann. Gemäß Figur 2, weist der Beschleunigungsschalter 5 dabei wiederum eine Biegeelektrode 51 auf, die unter Einwirkung einer Beschleunigung auf eine Festelektrode 52 einwirkt und mit dieser einen Kontakt herstellt, der am Schaltungspunkt S4 die Spannung ändert, welche als Schaltsignal ss dem Zündschaltkreis 9 zugeführt wird. Aufgrund der Prellneigung solcher mikromechanischen Beschleunigungsschalter 5 unterliegt das Signal am Schaltungspunkt 4 im folgenden einem Zeitglied 55, das die Schließdauer verlängert, und bei eingangsseitig anliegender Flanke, welche ein Schließen des Beschleunigungsschalters 5 kennzeichnet, ausgangsseitig ein Schaltsignal ss definierter Zeitlänge liefert. Durch das Zeitglied 55 wird gewährleistet, daß auch zu Zeitpunkten, zu denen infolge eines Prellens der Beschleunigungsschalterkontakte 51 und 52 kein Schaltsignal ss am Schaltungspunkt S4 anliegt, dennoch ein Auslösesignal ls zum Zünden des Zündelement führt. Ferner weist der Beschleunigungsschalter 5 eine Festelektrode 53 auf, die mittels des Testsignals ts der Steuerschaltung 4 angesteuert wird, und aufgrund elektrostatischer Kräfte die Biegeelektrode 51 zu einem Schließen mit der Festelektrode 52 veranlaßt. Auch in diesem Fall wird am Schaltungspunkt S4 ein Schaltsignal erzeugt, das als Schaltsignal ss mit festgelegter Zeitdauer dem integrierten Zündschaltkreis 9 zugeführt wird.

Wie in Figur 1 ist auch in Figur 2 eine ein Freigabesignal fs liefernde Überwachungsschaltung 7 für die Steuerschaltung 4 vorgesehen.

Das Sperrmittel 6 erzeugt dabei ein testbeeinflußtes Freiganesignal fs' für den Zündschaltkreis 9 in Abhängigkeit des Freigabesignals fs, des ggf invertierten Testsignals ts oder des Schaltsignals ss. So liegt während des Normalbetriebs - im Gegensatz zum Testbetrieb - das Freigabesignal fs als testbeeinflußtes Freigabesignal fs' am Zündschaltkreis 9 an. Bei einem Beschleunigungsschaltertest wird vorzugsweise mit Beginn des Testsignals, des Schaltsignals ss oder des Signals am Schaltungspunkt 4 das testbeeinflußte Freigabesignal fs' unterbrochen. Die Unterbrechung des testbeeinflußten Freigabesignals fs' und damit das Sperren einer Zündung dauert zumindest solange an, bis das Schaltsignal ss wieder seinen LOW-Zustand eingenommen hat.

Im Zündschaltkreis 9 wird das testbeeinflußte Freigabesignal fs' wiederum über ein UND-Gatter verknüpft mit dem Auslösesignal ls.

**Patentansprüche**

1. Vorrichtung zum Auslösen eines Insassenschutzmittels eines Kraftfahrzeugs,

   - mit einer Energiequelle (1), mit einem Zündelement für das Insassenschutzmittel, und mit einem elektrisch steuerbaren Schaltmittel zum Übertragen von Energie aus der Energiequelle (1) auf das Zündelement (2) bei Betätigung des Schaltmittels (3),
   - mit einer Steuerschaltung (4) zum aufprallabhängigen Betätigen des Schaltmittels (3), und
   - mit einem testbaren Beschleunigungsschalter (5),
   - bei der das Auslösen des Insassenschutzmittels erfolgt, wenn das Schaltmittel (3) betätigt ist und der Beschleunigungsschalter (5) ein Schaltsignal (ss) liefert,
   - bei der ein Sperrmittel (6) vorgesehen ist, das eine Betätigung des Schaltmittels (3) während eines Tests des Beschleunigungsschalters (5) verhindert,
   - bei der ein Überwachungsmittel (7) für die Steuerschaltung (4) vorgesehen ist, bei der das Überwachungsmittel (7) abhängig von einem ermittelten Betriebszustand der Steuerschaltung (4) ein Freigabesignal (fs) an das Schaltmittel (3) liefert, und bei der ein Betätigen des Schaltmittels (3) durch die Steuerschaltung (4) nur bei vorliegendem Freigabesignal (fs) möglich ist.

2. Vorrichtung nach Anspruch 1, bei der das Überwachungsmittel (7) zum Überprüfen eines Arbeitstaktes (as) der Steuerschaltung (4) ausgebildet ist, und bei der das Freigabesignal (fs) von der Überwachungsschaltung geliefert wird, solange der Arbeitstakt (as) keine Unregelmäßigkeit aufweist.

3. Vorrichtung nach Anspruch 1 oder Anspruch 2, bei der das Sperrmittel (6) zum Unterbrechen des Freigabesignals (fs) ausgebildet ist.

4. Vorrichtung nach einem der vorhergehenden Ansprüche, bei der die Steuerschaltung (4) zum Erzeugen eines Testsignals (ts) für den Beschleunigungsschalter (5) ausgebildet ist, und bei der das Sperrmittel (6) mit dem Beginn des Testsignals (ts) aktiviert wird.

5. Vorrichtung nach Anspruch 4, bei der der Beschleunigungsschalter (5) mit einem Zeitglied (55) verbunden ist, und bei der das Zeitglied (55) bei Aktivierung des Beschleunigungsschalters (5) das eine festgelegte Zeitdauer aufweisende Schaltsignal (ss) liefert.

6. Vorrichtung nach Anspruch 5, bei der das Sperrmittel (6) mit dem Ende des Schaltsignals (ss) deaktiviert wird.

7. Vorrichtung nach einem der vorhergehenden Ansprüche, bei der das Sperrmittel (6) in seiner Hardware unabhängig ist von der Hardware der Steuerschaltung (4).

**Claims**

1. System for triggering a vehicle occupant protection mechanism,

   - having a power source (1), a firing element for the occupant protection mechanism arid an electrically controlled switching device for transmitting power from the power source (1) to the firing element (2) when the switching device (3) is actuated,
   - having a control circuit (4) for impact-dependent actuation of the switching device (3), and
   - having a testable acceleration switch (5)
   - whereby the occupant protection mechanism is triggered when the switching device (3) has been actuated and the acceleration switch (5) delivers a switching signal (ss),
   - whereby a disabling device (6) is provided which prevents actuation of the switching device (3) during testing of the acceleration switch (5),
   - whereby a monitoring device (7) is provided for the control circuit (4), said monitoring device (7) supplying an enabling signal (fs) to the switching device (3) as a function of a determined operating state of the control circuit (4), actuation of the switching device (3) by the control circuit (4) only being possible when the enabling signal (fs) is present.

2. System according to Claim 1, **characterised in that** the monitoring device (7) has been implemented for checking an operating clock signal (as) of the control circuit (4) and that the enabling signal (fs) is supplied by the monitoring device as long as the operating clock signal (as) exhibits no irregularity.

3. System according to Claim 1 or Claim 2, **characterised in that** the disabling device (6) has been implemented to interrupt the enabling signal (fs).

4. System according to one of the preceding claims, **characterised in that** the control circuit (4) has been implemented to generate a test signal (ts) for the acceleration switch (5) and that the disabling device (6) is activated on commencement of the test signal (ts).

5. System according to Claims 4, **characterised in that** the acceleration switch (5) is connected to a timing element (55) and that said timing element (55) supplies a switching signal (ss) having a fixed time duration when said acceleration switch (5) is activated.

6. System according to Claim 5, **characterised in that** the disabling device (6) is deactivated with the end of the switching signal (ss).

7. System according to one of the preceding claims, **characterised in that** the hardware of the disabling device (6) is independent of the hardware of the control circuit (4).

**Revendications**

1. Dispositif de déclenchement d'un moyen de protection d'occupant d'un véhicule automobile,

   - comprenant une source d'énergie (1), un élément d'allumage pour le moyen de protection d'occupant et un moyen de commutation pouvant être commandé électriquement servant à transmettre de l'énergie de la source d'énergie (1) à l'élément d'allumage (2) lors d'un actionnement du moyen de commutation (3),
   - comprenant un circuit de commande (4) servant à actionner en fonction d'une collision le moyen de commutation (3), et
   - comprenant un interrupteur à accélération (5) pouvant être testé,
   - dans lequel le déclenchement du moyen de protection d'occupant a lieu lorsque le moyen de commutation (3) est actionné et l'interrupteur à accélération (5) délivre un signal de commutation (ss),
   - dans lequel il est prévu un moyen de blocage (6) qui empêche un actionnement du moyen de commutation (3) pendant un test de l'interrupteur à accélération (5),
   - dans lequel il est prévu un moyen de surveillance (7) pour le circuit de commande (4), dans lequel le moyen de surveillance (7) délivre un signal de libération (fs) au moyen de commutation (3) en fonction d'un état de fonctionnement déterminé du circuit de commande (4) et dans lequel un actionnement du moyen de commutation (3) au moyen du circuit de commande (4) n'est possible que lorsqu'un signal de libération (fs) est présent.

2. Dispositif suivant la revendication 1, dans lequel le moyen de surveillance (7) est agencé pour surveiller un signal d'horloge de travail (as) du circuit de commande (4) et dans lequel le signal de libération (fs) est délivré par le circuit de surveillance aussi longtemps que le signal d'horloge de travail (as) ne comporte aucune irrégularité.

3. Dispositif suivant la revendication 1 ou la revendication 2, dans lequel le moyen de blocage (6) est agencé pour interrompre le signal de libération (fs).

4. Dispositif suivant l'une des revendications précédentes, dans lequel le circuit de commande (4) est agencé pour produire un signal de test (ts) pour l'interrupteur d'accélération (5) et dans lequel le moyen de blocage (6) est activé au début du signal de test (ts).

5. Dispositif suivant la revendication 4, dans lequel l'interrupteur à accélération (5) est relié à un organe de temporisation (55) et dans lequel l'organe de temporisation (55) délivre le signal de commutation (ss), présentant une durée déterminée, lors d'une activation de l'interrupteur à accélération (5).

6. Dispositif suivant la revendication 5, dans lequel le moyen de blocage (6) est désactivé à la fin du signal de commutation (ss).

7. Dispositif suivant l'une des revendications précédentes, dans lequel le moyen de blocage (6) est, dans ses moyens informatiques matériels, indépendant des moyens informatiques matériels du circuit de commande (4).

# FIG 1

FIG 2